# EUROPEAN PATENT APPLICATION

(11) **EP 0 598 528 A2**
(43) Date of publication of application: **25.05.1994**
(21) Application number: 93308857.7
(22) Date of filing: 05.11.1993
(51) Int. Cl.: G06K 7/08

(54) **Identification system using magnetic coupling**

(30) Priority: 16.11.1992 US 976779
(71) Applicant: WESTINGHOUSE ELECTRIC CORPORATION, Pittsburgh Pennsylvania 15222 (US)
(72) Inventor: Frech, John Wendell, Baltimore, Maryland 21213 (US)
(74) Representative: van Berlyn, Ronald Gilbert

(57) **Abstract**

An identification system is provided having a stationary member and a portable passive member adapted to derive its operating power from the stationary member. A first coupling device such as a coil antenna is provided on the stationary member for transmitting a signal of a predetermined frequency via a magnetic field. A second coupling device provided on the portable member receives that signal and a power device derives operating power for the portable passive member from that signal. A third coupling device on the portable passive member transmits coded information stored on circuitry in the portable member via magnetic field. This third coupling device is offset from the second coupling device so that the net flux generated in the second coupling device from the third coupling device is approximately zero. A fourth coupling device provided on the stationary member receives the coded information transmitted by the third coupling device. The fourth coupling device is offset from the first coupling device so that the net flux generated in the fourth coupling device from the first coupling device is approximately zero. By utilizing the offset of the receive and transmit coupling devices on each member, simultaneous magnetic transmissions can be sent by both the stationary member and the portable member.

## Description

The present invention relates to an identification system utilizing a portable passive tag which is powered by and communicates with a stationary reader. More particularly, the present invention relates to an improved identification system in which the portable tag is powered by and communicates with the stationary reader solely by means of magnetic coupling.

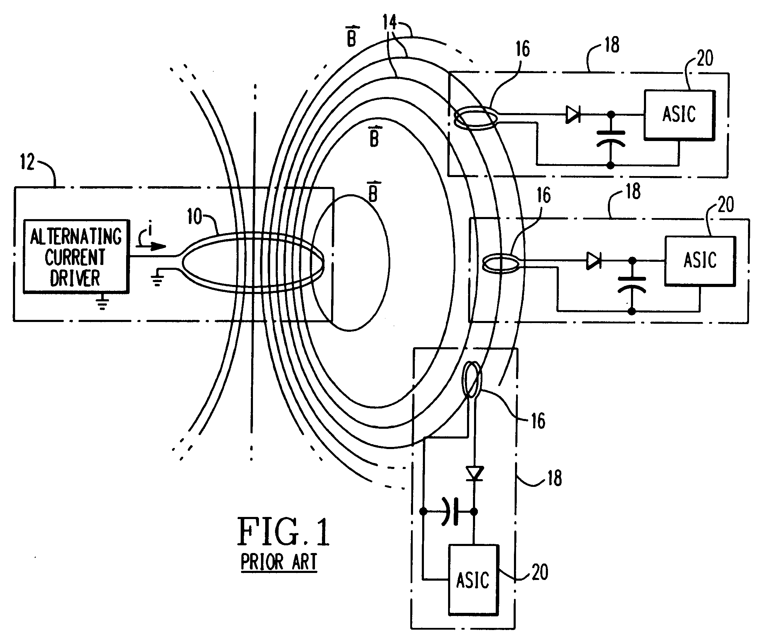

Portable passive security tag systems are presently available that use magnetic coupling for energy transfer from a stationary power source to a credit card size portable uniquely coded security tag. An example of such a system is shown in Figure 1. Therein, transmit coil 10 of reader 12 creates a magnetic field (B) represented by flux lines 14. Such a magnetic field typically alternates at a frequency somewhat below 200 kHz. Flux lines 14 link with a coil 16 in portable tag 18 to induce current flow and thereby produce a voltage. Portable tag 18 rectifies that voltage to give a voltage high enough to power an application specific integrated circuit (ASIC). The alternating voltage in coil 16 is also used to clock the ASIC.

When a tag 18 and reader 12 are close enough for adequate transfer of energy, the tag ASIC 20 generates a coded signal that is sent back to reader 12. Tag 18 sends its code on a carrier frequency that is different than the reader 12 transmit frequency. Both magnetic coupling from tag 18 to reader 12 and electrostatic coupling from tag 18 to reader 12 have been tried.

A problem frequently encountered by prior art portable passive security tag systems results from the necessity for both the reader and the tag to have transmit and receive antennas. Problems exist in decoupling the transmit and receive antennas sufficiently to achieve a desirable range. Specifically, the prior art security tag systems experience great difficulty in achieving adequate isolation between the transmit and receive coils in the magnetically coupled system. One proposed solution to overcome these difficulties is to utilize magnetic coupling from reader to tag and electrostatic coupling from tag to reader.

United States Patent No. 4,818,855 shows an identification system in which a remotely powered portable member having circuitry for storing and transmitting coding information is provided. Therein, a first coupling device is provided for receiving a signal transmitted via one of a magnetic field and an electrostatic field. A power circuit connected to the first coupling device derives operating power from the received signal for use by the circuitry. A second coupling device is connected to the circuitry for transmitting coded information stored by the circuitry via the other one of the magnetic field and electrostatic field. The use of both an electrostatic and a magnetic field overcomes the problem of interference between the transmit and receive antennas on each of the reader and the tag.

Although United States Patent No. 4,818,855 overcomes the interference problems associated with the sole use of magnetic coupling, problems occur through the use of the electrostatic coupling. First, the range of the electrostatic field from the tag to the reader is limited to approximately one foot. Consequently, the tag must be in close proximity to the reader in order for the reader to receive the coded signal. Second, the electrostatic field is blocked by conductive, magnetic, or high dielectric objects such as people, clothing, calculators, and the like. Therefore, even if the tag were brought within the limited range of about one foot of the reader, the identification system cannot reliably function without presenting the tag to the reader in a deliberate particular manner. Consequently, there is a need for an identification system which avoids mutual interference between transmit and receive magnetic field antennas and has a broad range.

In order to solve the problem of limited range and signal blockage, the present identification system utilizes a magnetic field for energy transfer from the reader to the tag and a magnetic field for transmitting coded information from the tag to the reader. Mutual interference between transmit and receive magnetic field antennas for the same device is avoided by providing the receive antenna in an offset arrangement relative to the transmit antenna. The receive antenna is positioned with respect to the transmit antenna of the same device such that the net flux generated in the receive antenna by the signal of the transmit antenna is approximately zero. In such a manner, the effect of the transmit antenna on the companion receive antenna is nulled and any current generated in the receive coil is the result of the opposing device's transmit coil.

The preferred embodiments of the invention will now be described, by way of example, with reference to the accompanying drawings, in which:

Figure 1 is a schematic representation of a prior art identification system.

Figure 2 is a schematic representation of a second prior art identification system illustrating the problems associated with mutual interference.

Figure 3 is a schematic representation of a presently preferred embodiment of the present identification system.

Figure 4 is a schematic representation of the receiver unit of the identification system of Figure 3.

Figure 5 is a schematic top view representation of the receiver unit of Figure 4.

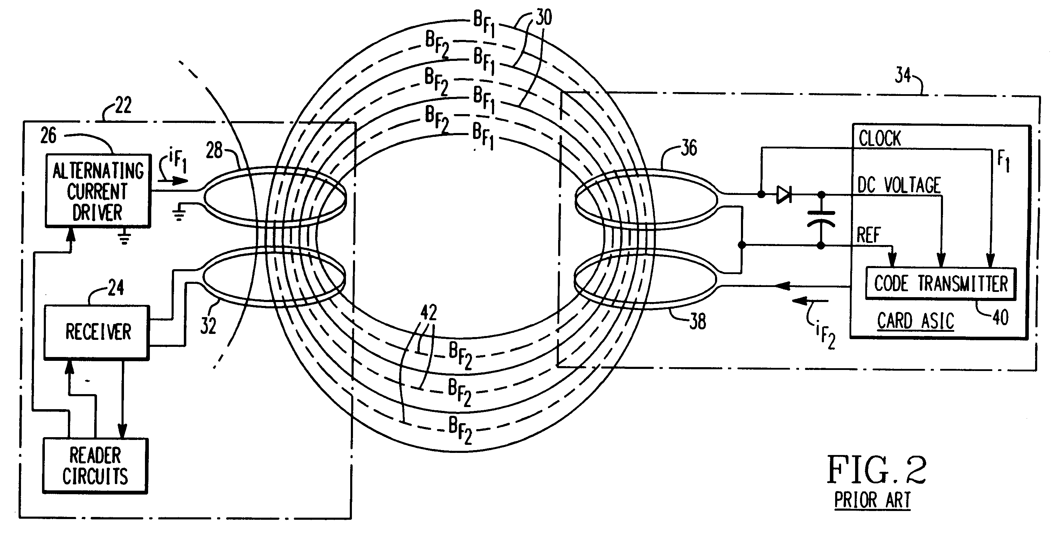

The identification system of the present invention solves the problem of mutual interference of magnetic coils by offsetting the receiver coil of a unit from that unit's transmission coil. Figure 2 illustrates the problem associated with mutual interference. As shown in Figure 2, stationary unit 22 is equipped with receiver 24 and alternating current driver 26. Power transmit coil 28 is connected to alternating current driver 26 and generates a magnetic field (B_{F1}) whose flux lines are indicated at 30. Reader receiver coil 32 is connected to receiver 24 and is used to detect the presence of a portable tag.

On the opposing side of the identification system of Figure 2 is tag 34 having power receive coil 36 and transmit coil 38. Power receive coil 36 is connected to code transmitter means 40 which generates the signal (i_{F2}) to be transmitted on transmit coil 38. The magnetic field (B_{F2}) generated by transmit coil 38 is represented by flux lines 42. The frequency of the current (i_{F1}) passing through transmit coil 28 (and, hence, the frequency of magnetic field 30) is different than the frequency of the current (i_{F2}) passing through transmit coil 38 (and, hence, the frequency of magnetic field 42).

As illustrated in Figure 2, when no provision is made to offset the receive coils 32, 36 from their respective transmit coils 28, 38, the flux lines 30, 42 from each of transmit coils 28, 38 pass through the respective companion receive coil 32, 36. In such an arrangement, the flux 30 generated by power transmit coil 28 interferes with the reception by reader receive coil 32 of flux lines 42. In a like manner, the flux lines 42 generated by tag transmit coil 38 interferes with the reception by power receive coil 36 of the flux lines 30. However, the interference occurring at tag 34 is less of a problem than the interference occurring at the stationary unit 22. Similar problems may also arise when coil sets 28, 32 or 36, 38 do not overlap. Even in this situation, transmit coil 28, 38 may still induce a current in its companion receive coil 32, 36.

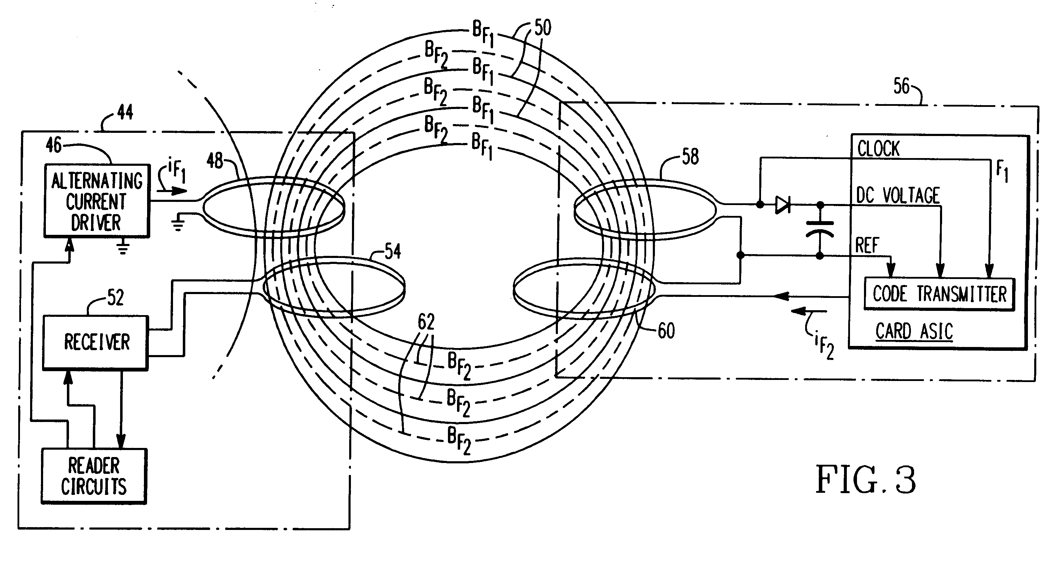

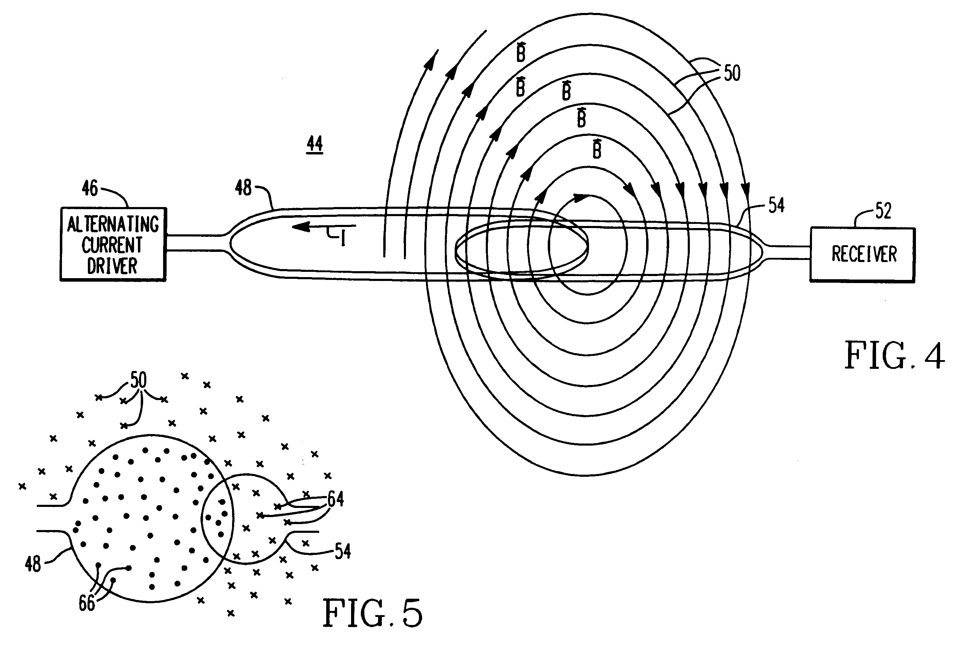

In order to prevent such interference, the receive coils at each of the stationary unit and remote portable tag unit of the present invention are offset from their respective transmit coil. Figure 3 illustrates such an arrangement for both stationary unit 44 and tag 56. Figure 4 demonstrates the principles underlying the present invention in connection with stationary unit 44. It is to be understood that the same principles apply to tag unit 56. In stationary unit 44, driver 46 is equipped with transmit coil 48 which generates a magnetic field (B) whose flux is represented by 50. The receiver 52 of stationary unit 44 is equipped with a receive coil 54 which is offset from the transmit coil 48 of the driver 46. Receive coil 54 is located with respect to transmit coil 48 such that the flux 50 generated by transmit coil 48 has no net effect on the generation of current in receiver coil 54. This is accomplished by locating receiver coil 54 at a position where half the flux lines 50 passing therethrough go in one direction and the remaining half go in the opposite direction. This can best be seen in Figure 5 wherein half of the flux lines (64) within receiver coil 54 are directed into the paper and half of the flux lines (66) passing through receiver coil 54 are directed out of the paper. The coils shown in Figures 3, 4 and 5 can be formed into shapes other than circles as deemed necessary by the particular application.

As shown in Figures 3-5, the interference between the transmit antenna 48 and receive antenna 54 in the stationary unit 44 can be essentially eliminated by shifting the transmit coil 48 and receive coil 54 relative to each other. This same principle applies with regard to tag 56 in which the interference between transmit coil 60 and power receive coil 58 is essentially eliminated. Power receive coil 58 is arranged relative to transmit coil 60 such that the flux 62 generated by transmit coil 60 has no net effect on the generation of current in receive coil 58.

In the stationary unit 44, transmit coil 48 is driven hard by driver 46 to produce flux lines 50 that link with receiver coil 54. However, by shifting receiver coil 54 and transmit coil 48 relative to each other, the net flux linkages passing through receiver coil 54 can be made very close to zero. In this condition of zero flux linkages, the receive coil 54 and transmit coil 48 do not recognize the presence of each other.

Having achieved zero net flux linkages in receiver coil 54, the advantages of total magnetic coupling for both reader and tag can be achieved. These advantages include increased range of operation, less interference from objects such as fluorescent lights, motor brushes and the like and less signal attenuation by conductive or magnetic or high dielectric objects passing between the reader and tag such as people, clothing, calculators and the like. Because communication is accomplished by a magnetic field, the effectiveness of this identification system is not significantly diminished by burying the tag in a shirt pocket, wallet, attache case or the like. Moreover, the present identification system allows for multiple tag recognition in a tight cluster of people.

The present identification system was experimentally tested utilizing a reader having a ten inch diameter transmit coil and a ten inch diameter receive coil. These coils were shifted to achieve a null in the receiver coil voltage of greater than 75 dB. The actual null depth was not measured because at null the instrumentation used could not detect a signal.

In a second experiment, a ten inch diameter reader transmit coil and a five inch diameter reader receive coil were shifted to achieve a null. In this experiment, the transmit coil was driven hard enough to transfer sufficient energy to a two inch tag coil approximately three feet away to enable the tag to work. The unwanted voltage at the reader receive coil was less than about 150 mv peak-to-peak. The voltage on the transmit coil was about 1200 volts and the 150 mv signal was essentially the third or fifth harmonic of the transmit frequency of about 175 kHz.

In the second experiment, the null was not difficult to achieve. Shifting from the best position by about 1/16 inch increased the signal to about 300 mv peak-to-peak. A signal of 300 mv, or a much higher unwanted signal, does not challenge the dynamic range of a typical low noise receiver such as an operational amp supplied with +/- 15 volts. The residue unwanted pick-up can be filtered or processed out electronically. It was also found that the null was not significantly degraded by hand waving or passing a pocket calculator over and around the coil pair.

The present identification system can be incorporated into systems requiring communication from a portable member to a stationary unit. By placing the portable tag on a commodity or mail bag, the location of the commodity can be tracked. In this same manner, the identification system can be used as a means of prisoner tracking. The portable unit can replace a key and be used for a parking lot entrance or as a keyless access to a house or car. In this same manner, the present invention can be used as a security device to restrict access to secure areas. Moreover, the present invention can be used in connection with toll roads to record the entrance and exit of a vehicle from a restricted toll highway and deduct the toll from an account held by the owner of that tag.

The isolation of a receive antenna from the effects of a transmit antenna on the same device has other applications in addition to the identification system discussed above. The present invention may also be used in transceivers to isolate the transmit and receive antennas of the same device. The present invention provides full duplex operation of the transceiver in an inexpensive manner.

In the foregoing specification certain preferred practices and embodiments of this invention have been set out, however, it will be understood that the invention may be otherwise embodied within the scope of the following claims.

## Claims

1. In an identification system having a stationary member (44) and a portable passive member (56), said portable passive member (56) having circuitry for storing and transmitting coded information, the improvement comprising:
(a) first coupling means (48) provided on said stationary member (44) for transmitting a signal of a predetermined frequency via a magnetic field (50);
(b) second coupling means (58) provided on said portable passive member (56) for receiving said signal of a predetermined frequency;
(c) power means provided on said portable passive member connected to said second coupling means for deriving operating power from the received signal for use in said circuitry provided in said portable passive member;
(d) third coupling means (60) provided on said portable passive member (56) connected to said circuitry in said portable passive member for transmitting coded information stored by said circuitry in said portable passive member via a magnetic field (62), said third coupling means (60) being offset from said second coupling means (58) so that the net flux generated in said second coupling means (58) from said third coupling means (60) is approximately zero; and
(e) fourth coupling means (54) provided on said stationary member (44) for receiving said coded information (62) transmitted by said third coupling means, said fourth coupling means (54) being offset from said first coupling means (48) so that the net flux generated in said fourth coupling means (54) from said first coupling means (48) is approximately zero.

2. The identification system of claim 1 wherein each of said first coupling means (48), second coupling means
(58), third coupling means (60) and fourth coupling means (54) is a coil antenna.

3. The identification system of claim 2 wherein the net flux generated in said fourth coupling means (54) from said first coupling means (48) is less than - 75dB.

4. The identification system of claim 2 wherein the net flux generated in said second coupling means (60) from said third coupling means (58) is less than - 75dB.

5. In a portable passive member (56) of a communication system also having a stationary member (44), said portable passive member (56) having circuitry for storing and transmitting coded information, the improvement comprising:
(a) first coupling means (58) provided on said portable passive member (56) for receiving a signal (50) of a predetermined frequency transmitted by said stationary member (44);
(b) power means provided on said portable passive member connected to said first coupling means (58) for deriving operating power from said received signal for use in said circuitry provide on said portable passive member (56); and
(c) second coupling means (60) provided on said portable passive member (56) connected to said circuitry in said portable passive member for transmitting coded information (62) stored by said circuitry in said portable passive member (56) via a magnetic field (62), said second coupling means (60) being offset from said first coupling means (58) so that the net flux generated in said second coupling means (60) from said first coupling means (58) is approximately zero.

6. The portable passive member of claim 5 wherein each of said first coupling means (58) and second coupling means (60) is a coil antenna.

7. The portable passive member of claim 6 wherein the net flux generated in said first coupling means (58) from said second coupling means (60) is less than - 75dB.

8. In a stationary member (44) of a communication system also having a portable passive member (56), said portable passive member adapted to transmit coded information, the improvement comprising:
(a) first coupling means (48) provided on said stationary member for transmitting a signal of a predetermined frequency via a magnetic field (50); and
(b) second coupling means (54) provided in said stationary member for receiving coded information transmitted by said portable passive member, said second coupling means (54) being offset from said first coupling means (48) so that the net flux generated in said second coupling means (54) from said first coupling means (48) is approximately zero.

9. The stationary member of claim 8 wherein each of said first coupling means (48) and second coupling means (54) is a coil antenna.

10. The stationary member of claim 9 wherein the net flux generated in said second coupling means (54) from said first coupling means (48) is less than 75dB.

11. In a communication system having at least two transceivers, the improvement comprising:
(a) first coupling means provided on a first of said at least two transceivers for transmitting a signal of a first predetermined frequency via a magnetic field;
(b) second coupling means provided on a second of said at least two transceivers for receiving said signal of a first predetermined frequency;
(c) third coupling means provided on said second of said at least two transceivers for transmitting a signal of a second predetermined frequency via a magnetic field, said third coupling means being offset from said second coupling means so that the net flux generated in said second coupling means from said third coupling means is approximately zero; and
(d) fourth coupling means provided on said first of said at least two transceivers for receiving said signal of a second predetermined frequency transmitted by said third coupling means, said fourth coupling means being offset from said first coupling means so that the net flux generated in said fourth coupling means from said first coupling means is approximately zero.

12. The communication system of claim 11 wherein each of said first coupling means, second coupling means, third coupling means and fourth coupling means is a coil antenna.
